Europäisches Patentamt

European Patent Office

Office européen des brevets

(11) Veröffentlichungsnummer: **0 396 822**
**A1**

## (12) EUROPÄISCHE PATENTANMELDUNG

(21) Anmeldenummer: 89122767.0

(22) Anmeldetag: 09.12.89

(51) Int. Cl.⁵: **F42C  14/08,  G01S  17/02,**
**G01S  17/87,  F42C  13/02**

(30) Priorität: **18.04.89 DE 3912672**

(43) Veröffentlichungstag der Anmeldung:
**14.11.90 Patentblatt  90/46**

(84) Benannte Vertragsstaaten:
**DE FR GB IT**

(71) Anmelder: **Rheinmetall GmbH**
**Ulmenstrasse 125 Postfach 6609**
**D-4000 Düsseldorf(DE)**

(72) Erfinder: **Paech, Joachim, Dr.**
**Peter-Rosegger-Strasse 15b**
**D-4006 Erkrath(DE)** .

(74) Vertreter: **Podszus, Burghart, Dipl.-Phys.**
**Rheinmetall GmbH Ulmenstrasse 125**
**Postfach 6609**
**D-4000 Düsseldorf(DE)**

(54) **Abstandsmine mit optischem Suchzünder.**

(57) Die Erfindung betrifft eine Abstandsmine (2) mit optischem Suchzünder (3), der mindestens einen Laserentfernungsmesser (41, 45 bis 44, 45) enthält.

Um automatisch Ziele (7) in einem großen Azimutwinkelbereich detektieren und bekämpfen zu können, wird vorgeschlagen, daß der bzw. die Laserentfernungsmesser (41, 45 bis 44, 45) sich auf einer während des Suchvorganges rotierenden Haltevorrichtung (50) befinden. Die von dem bzw. den Laserentfernungsmesser (n) (41, 45 bis 44, 45) gewonnenen Entfernungsmeßwerte werden in einer Steuer- und Auswertevorrichtung (60) verarbeitet und mit zeitlich früheren Meßwerten verglichen. Vorzugsweise kann zur Zündsignalermittlung zusätzlich zu dem Vergleich der gemessenen Entfernungsprofile auch ein Vergleich der entsprechenden Reflexionsprofile erfolgen.

FIG. 1

## Abstandsmine mit optischem Suchzünder

Die Erfindung betrifft eine Abstandsmine mit einem optischen Suchzünder, wie er im Oberbegriff des Anspruchs 1 definiert ist.

Derartige Minen sind an sich beispielsweise aus der DE 36 01 053 A1 bekannt. Dabei wird ein Laserentfernungmesser in Verbindung mit zusätzlichen Wachschalterdetektoren beschrieben, mit dem eine Vorhaltberechnung oder eine Zündverzögerung bei zu hoher bzw. zu geringer Zielgeschwindigkeit möglich ist.

Nachteilig bei derart bekannten Abstandsminen mit Suchzündern ist vor allem, daß die Auslöseanordnung nur für starre Richtminen in Frage kommt.

Weiterhin ist eine genaue Bestimmung von Ziellänge und -geschwindigkeit nur eingeschränkt möglich. Insbesondere eignet sich diese Vorrichtung nicht zur Flächensperrung in hügeligem Gelände.

Aus der DE 35 45 175 ist ferner eine vollautomatisch arbeitende abwerfbare Richtmine mit einem Laserentfernungsmesser bekannt. Während des Aufrichtvorganges wird die momentane Schußbahn laufend durch den Entfernungsmesser kontrolliert und dieser Vorgang so gesteuert, daß auch in unebenem Gelände eine günstige, hindernisfreie Schußausgangsstellung gegeben ist.

Diese Anordnung weist den Nachteil auf, daß ein hügeliges Gelände nur unvollkommen abgedeckt wird. Weiterhin kann die Schußrichtung nur in begrenztem Maße optimiert werden. Nach Beendigung des Aufrichtvorganges werden Ziele nur in einer Richtung detektiert.

Der vorliegenden Erfindung liegt daher die Aufgabe zugrunde, eine Abstandsmine mit optischem Suchzünder anzugeben, die die Nachteile der vorerwähnten Abstandsminen nicht aufweist.

Diese Aufgabe wird erfindungsgemäß durch die Merkmale des kennzeichnenden Teiles des Anspruchs 1 gelöst.

Vorteilhafte Ausgestaltungen der Erfindung ergeben sich aus den Merkmalen der Unteransprüche.

Weitere Einzelheiten und Vorteile der Erfindung werden im folgenden anhand eines Ausführungsbeispieles und mit Hilfe von Figuren näher erläutert.

Es zeigen:

Fig. 1 schematisch die Ansicht einer Abstandsmine im Gelände;

Fig. 2 eine Vorderansicht und

Fig. 3 eine Seitenansicht eines Ausführungsbeispiels des erfindungsgemäßen Suchzünders;

Fig. 4 eine Schaltungsvorrichtung zum Betrieb des Suchzünders;

Fig. 5 ein Impulsdiagramm zur Erläuterung der Wirkungsweise des erfindungsgemäßen Suchzünders und

Fig. 6 und Fig. 7 gemessene Entfernungs- und Reflexionsprofile für die Zielidentifizierung.

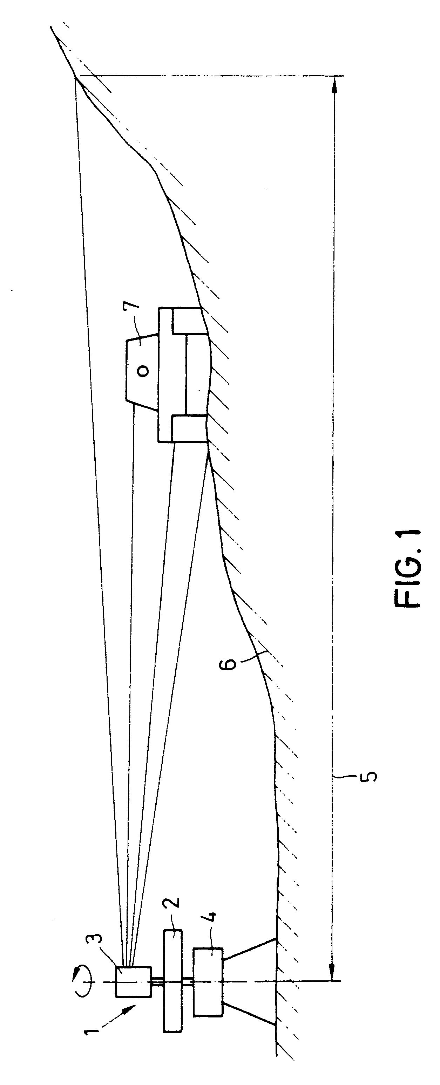

In Fig. 1 ist mit 1 die Vorrichtung, bestehend aus Abstandsmine und Suchzünder, bezeichnet. Dabei ist die Abstandsmine mit 2, eine drehbare Haltevorrichtung mit dem optischen Suchzünder mit 3 und der Bauraum für Batterien Stellantriebe und die Signalverarbeitung mit 4 gekennzeichnet. Der Schußhorizont, d. h. die maximale Minenreichweite Rmax, ist mit 5 angedeutet und 6 bzw. 7 ist eine Geländeerhebung bzw. ein zu bekämpfendes Ziel.

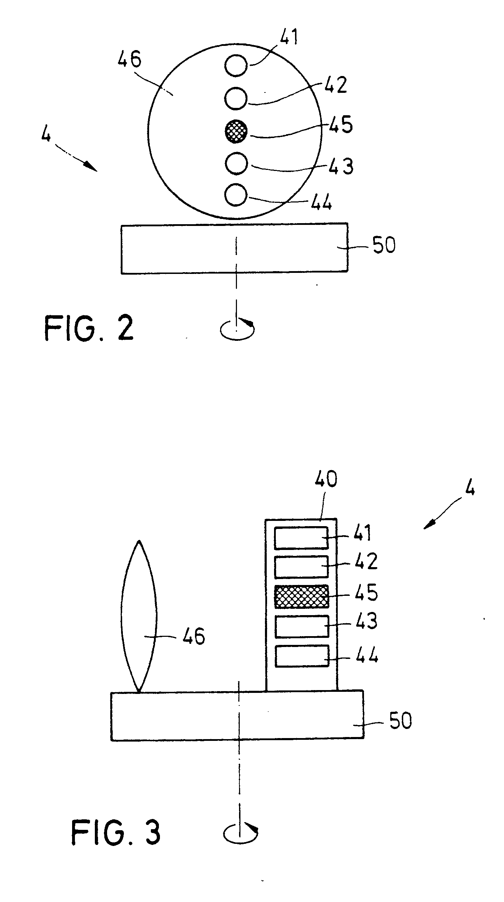

In den Fig. 2 und 3 ist der optische Suchzünder im einzelnen dargestellt. Er besteht im wesentlichen aus einer integrierten Lasersende- und Empfangsvorrichtung 40. Die drehbare Haltevorrichtung ist mit 50 bezeichnet.

Die Lasersendevorrichtung enthält im vorliegenden Fall vier Laserdioden 41 bis 44. Die Empfangsvorrichtung besteht aus einem Laserdetektor 45, der symmetrisch in der Laservorrichtung im Brennpunkt einer Optik 46 angeordnet ist.

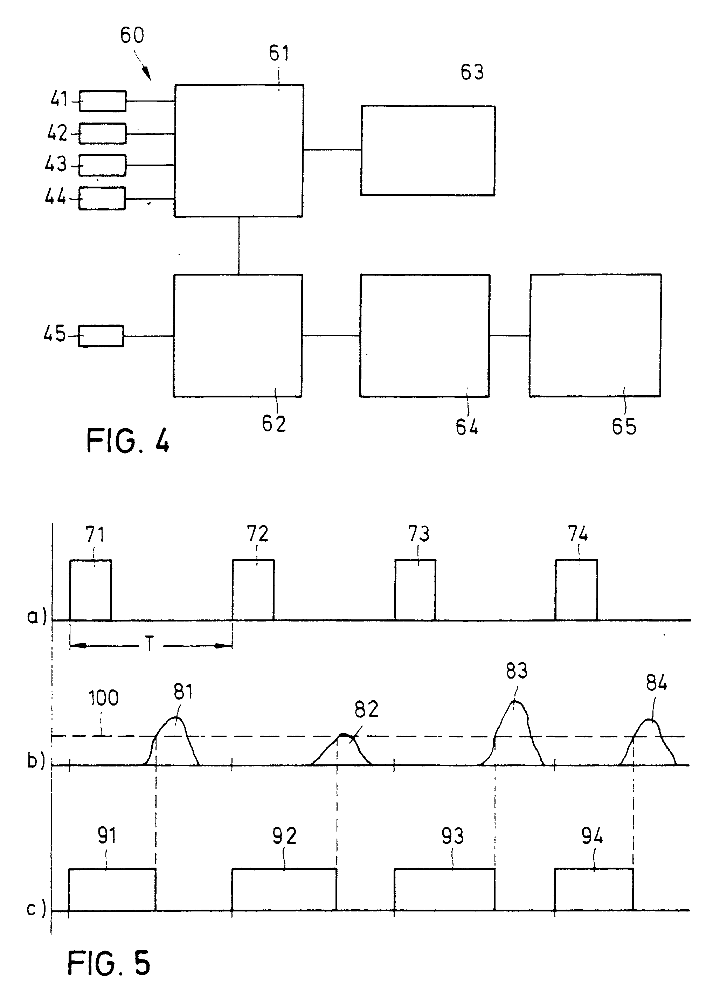

Wie in Fig. 4 angedeutet, sind die Lasersendedioden 41 bis 44 sowie der Laserdetektor 45 mit einer Steuer- und Auswertevorrichtung 60 verbunden. Ebenfalls an die Steuer- und Auswertevorrichtung 60 ist eine Zündvorrichtung 65 angeschlossen.

Im folgenden wird näher auf die Wirkungsweise der erfindungsgemäßen Vorrichtung eingegangen:
Die Zielortung besteht aus einer Trainingsphase und einer Suchphase. Während der Trainingsphase wird das Landschaftspfofil in der Umgebung der Mine aufgezeichnet und gespeichert. Die eigentliche Suchphase wird durch einen nicht dargestellten (z. B. akustischen) Wachschalter aktiviert. Dann beginnt die Haltevorrichtung mit dem optischen Suchzünder 3 zu rotieren. Durch diese Rotationsbewegung der Haltevorrichtung 50 tasten die Laserentfernungsmesser das Höhenprofil der Geländeformation im Schußhorizont ab. Aus den reflektierten Lichtstrahlen läßt sich mit Hilfe des Laufzeitunterschiedes zu den emittierten Strahlen die Entfernung bestimmen. Durch die divergent angeordneten Laserstrahlen ist diese Vorrichtung besonders geeignet, in unebenem Gelände das Zielhöhenprofil zu erfassen (vgl. auch Fig. 1).

Das durch das Entfernungs- und Reflexionsprofil charakterisierte Landschaftsprofil wird für jeden Laserentfernungsmesser in Abhängigkeit vom Azimutwinkel gespeichert. Während der Suchphase vergleicht die Steuer- und Auswertevorrichtung das gespeicherte Landschaftsprofil mit den jeweils neu detektierten Entfernungs- und Reflexionswerten, da ein sich ein in das Scangebiet hineinbewegendes Fahrzeug Differenzen im Entfernungs- und Reflexionsprofil verursacht. Abweichungen von den gespeicherten Werten werden auf Zielentfernung, -geschwindigkeit, -länge und -höhe untersucht. Bei einer Zieldetektion läßt sich aus den Meßdaten ein optimaler Zündzeitpunkt bestimmen, auf den dann die Mine ausgerichtet wird.

Für die Erzeugung des Laserlichtes werden Halbleiterlaser, die im nahen IR-Bereich arbeiten (0,8 bis 1,3 μm), verwendet. Die einzelnen Laser werden zeitlich versetzt gepulst, so daß die Reflexionen von Objekten in der maximal detektierbaren Entfernung empfangen werden können, bevor der jeweils nächste Laserimpuls emittiert wird. Dieses wird im folgenden mit Hilfe der Fig. 4 und 5 beschrieben.

Die Steuer- und Auswertevorrichtung 60 (Fig. 4) möge zunächst die Laserdiode 41 aktivieren, so daß ein entsprechender Laserimpuls ausgesandt wird. Hierzu ist mit den Dioden eine Laseransteuereinheit 61 verbunden, die entsprechende Spannungsimpulse 71 erzeugt.

Der Laserimpuls wird von dem Objekt 6 (Fig. 1) reflektiert und gelangt in den Empfangssensor 45, so daß sich am Ausgang der Laserempfangseinheit 62 ein entsprechendes Sig nal 81 ergibt. Dieses Signal wird der Signalverarbeitungsvorrichtung 64 zugeführt, digitalisiert und gespeichert. Anschließend aktiviert die Steuer- und Auswertevorrichtung 60 die zweite Laserdiode 42 durch einen entsprechenden Impuls 72. Das reflektierte Signal 82 gelangt dann wiederum über die Empfangsvorrichtung 62 in die Signalverarbeitungsvorrichtung 64. Der entsprechende Vorgang wiederholt sich dann für die Laserdioden 43 und 44.

Wie aus Fig. 5c zu entnehmen ist, bestimmt die Auswertevorrichtung automatisch die Entfernung zwischen dem Suchzünder mit Abstandsmine und dem Objekt. Hierzu wird der zeitliche Abstand zwischen ansteigender Impulsflanke des den Laserimpuls erzeugenden elektrischen Impulses 71 und dem Schnittpunkt der Vorderflanke des Empfangsimpulses mit einem Schwellenwert 100 ermittelt. Entsprechende Schaltungen sind seit langem bekannt und brauchen hier nicht näher erläutert zu werden. Die Breite der in Fig. 5c mit 91 bis 94 bezeichneten Tore entspricht dann dem jeweils gemessenen Abstandswert.

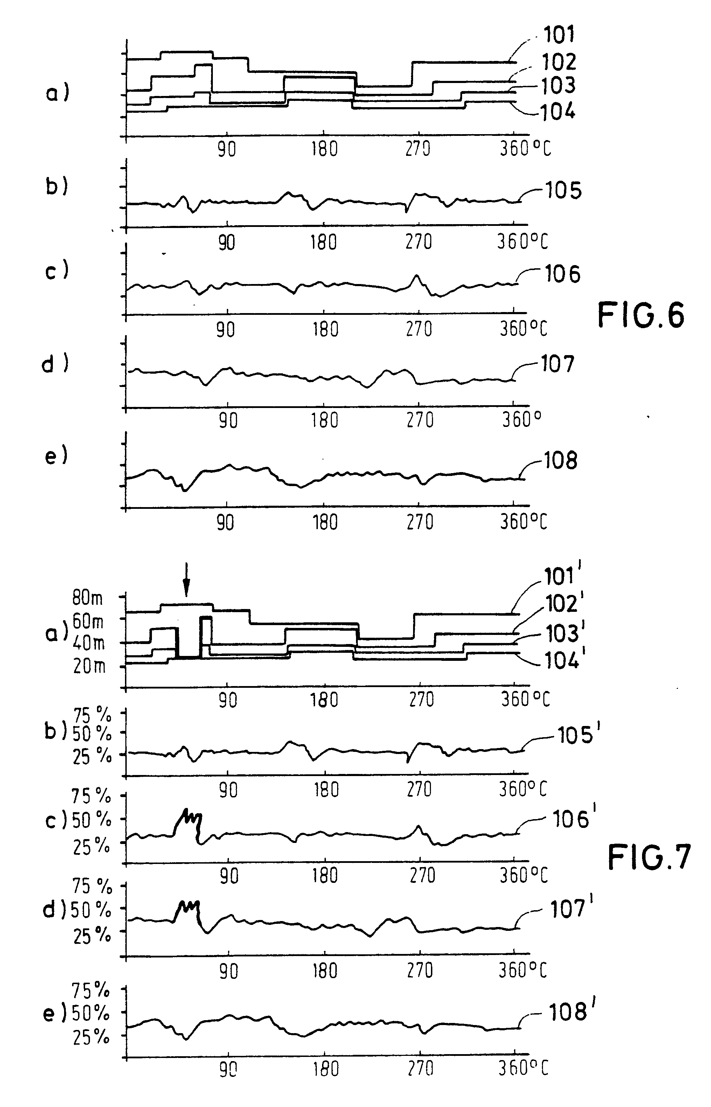

Die derart ermittelten Entfernungsprofile der einzelnen Laserentfernungsmesser 41, 45 bis 44, 45 für die Trainingsphase zeigt die Fig. 6a. Dabei entspricht die Kurve 101 den mit dem Entfernungsmesser 41, 45 und die Kurve 104 den mit dem Entfernungsmesser 44, 45 gemessenen Werten. In Fig. 7a ist das entsprechende Entfernungsprofil für die Suchphase wiedergegeben, wobei etwa die Situation vorliegen kann, wie sie in Fig. 1 dargestellt wurde. Deutlich ist zu erkennen, daß der Panzer 7 zu einer Änderung des Entfernungsprofils in dem schwarz umrandeten Gebiet führt.

Die Fig. 6b bis 6e und 7b bis 7e zeigen die entsprechenden Reflexionsprofile der einzelnen Laserentfernungsmesser in der Trainingsphase und in der Suchphase. Dabei wird die Amplitude des empfangenen Signales in Abhängigkeit vom Azimutwinkel des Suchzünders registriert und abgespeichert. Ein sich näherndes Ziel verursacht sowohl im Entfernungsprofil (vgl. Fig. 7a) wie im Reflexionsprofil Variationen (vgl. Fig. 7c und 7d), die zur Gewinnung entsprechender Zündsignale herangezogen werden können.

Bezugszeichenliste

1 Vorrichtung, bestehend aus Abstandsmine mit Suchzünder
2 Abstandsmine
3 drehbare Haltevorrichtung mit optischem Suchzünder
4 Bauraum für Batterie, Stellantriebe, Signalverarbeitung
5 maximaler Abstand (Schußhorizont)
6 Geländeerhebungen
7 zu bekämpfendes Ziel
40 Laservorrichtung
41 - 44 Laserdioden
45 Empfangssensor
46 Optik
50 drehbare Haltevorrichtung
60 Steuer- und Auswertevorrichtung
61 Laseransteuereinheit
62 Laserempfangseinheit
63 Energieversorgung
64 Signalverarbeitung
65 Zündvorrichtung
71 - 74 Spanungsimpulse der Laseransteuereinheit 61
81 - 84 Empfangssignale am Ausgang der Laserempfangseinheit 62
91 - 94 abstandsproportionale Zeittore
100 Schwellenwert
101 - 104 Entfernungsprofile
101' - 104' Entfernungsprofile
105 - 108 Reflexionsprofile
105' - 108' Reflexionsprofile

**Ansprüche**

1. Abstandsmine (2) mit optischem Suchzünder (3), der mindestens einen Laserentfernungsmesser (41, 45 bis 44, 45) enthält, **gekennzeichnet durch die Merkmale:**

- der bzw. die Laserentfernungsmesser (41, 45 bis 44, 45) befindet bzw. befinden sich auf einer während des Suchvorganges rotierendern Haltevorrichtung (50);
- die von dem bzw. den Laserentfernungsmesser (n) (41, 45 bis 44, 45) gewonnenen Entfernungs-Meßwerte werden in einer Steuer- und Auswertevorrichtung (60) verarbeitet und mit zeitlich früheren Meßwerten verglichen.

2. Abstandsmine nach Anspruch 1, **dadurch gekennzeichnet,** daß der optische Suchzünder (3) mindestens zwei Laserentfernungsmesser (41, 45 bis 44, 45) aufweist und daß jeder Laserentfernungsmesser den Schußhorizont (5) in einem unterschiedlichen Höhenbereich abtastet.

3. Abstandsmine nach Anspruch 1 oder 2, **dadurch gekennzeichnet,** daß die Laserentfernungsmesser im wesentlichen aus einer Laservorrichtung (40) mit zeilenförmig angeordneten Laserdioden (41 bis 44) und einer Empfangsvorrichtung (45) bestehen.

4. Abstandsmine nach Anspruch 3 oder 4, **dadurch gekenzeichnet,** daß die Laservorrichtung (40) bis zu zehn zeilenförmig angeordnete Laserdioden (41 bis 44) enthält.

5. Abstandsmine nach Anspruch 3 oder 4, **dadurch gekennzeichnet,** daß die Laserdioden (41 bis 44) zeitlich versetzt gepulst werden, so daß die Reflexionen von den Objekten des Schußhorizontes empfangen werden können, bevor der jeweils nächste Laserimpuls emittiert wird.

6. Abstandsmine nach Anspruch 1, **dadurch gekennzeichnet,** daß der Laservorrichtung (40) gegenstandsseitig eine gemeinsame Optik (46) vorgeschaltet ist.

7. Abstandsmine nach Anspruch 1, **dadurch gekennzeichnet,** daß zur Ermittlung von Zündsignalen zusätzlich zum Vergleich der gemessenen Entfernungsprofile (101-104; 101'-104') auch ein Vergleich der entsprechenden Reflexionsprofile (105 - 108; 105' - 108') erfolgt.

EP 0 396 822 A1

**FIG. 1**

FIG. 2

FIG. 3

RHEINMETALL GMBH

FIG. 4

FIG. 5

NMETALL GMBH

FIG.6

FIG.7

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | DE-A-3 545 175　(M B B GmbH)<br>* Insgesamt *<br>--- | 1 | F 42 C　14/08<br>G 01 S　17/02<br>G 01 S　17/87<br>F 42 C　13/02 |
| Y | EP-A-0 286 012　(DIEHL GmbH)<br>* Insgesamt *<br>--- | 1 | |
| A | DE-A-2 336 040　(M B B GmbH)<br>* Figuren 1,2; Seite 6, Zeile 11 -<br>Seite 7, Zeile 24 *<br>--- | 1 | |
| A | EP-A-0 318 039　(FUJITSU LTD)<br>* Zusammenfassung; Figuren 1-4 *<br>--- | 1,7 | |
| A | EP-A-0 026 385　(SIEMENS AG)<br>* Zusammenfassung; Figuren 1-4 *<br>--- | 1,7 | |
| A | GB-A-2 021 893　(ZELLWEGER USTER AG)<br>* Insgesamt *<br>--- | 1-7 | |
| A | GB-A-2 219 708　(M B B GmbH)<br>* Insgesamt *<br>--- | 1,7 | RECHERCHIERTE SACHGEBIETE (Int. Cl.5) |
| A | US-A-4 770 482　(SWEENEY et al.)<br>* Insgesamt *<br>--- | 2-6 | G 08 B<br>F 42 B<br>F 42 C<br>G 01 S |
| A,D | GB-A-2 185 556　(M B B GmbH)<br>* Insgesamt *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 02-08-1990 | BLONDEL F.J.M.L.J. |